# FASCICULE DE BREVET EUROPEEN

(11) **EP 2 578 083 B1**
(45) Date de publication et mention de la délivrance du brevet: **04.09.2019**
(21) Numéro de dépôt: 12187228.7
(22) Date de dépôt: 04.10.2012
(51) Int. Cl.: A01N 33/12, A61L 2/00, A01N 25/30, A01P 1/00, A01P 3/00

(54) **Compositions désinfectantes et détergentes**
Desinfektions- und Reinigungszusammensetzungen
Detergent and disinfectant compositions

(30) Priorité: 05.10.2011 FR 1103026
(43) Date de publication de la demande: 10.04.2013
(73) Titulaire: Ecolab USA Inc., Saint Paul, MN 55012 (US)
(72) Inventeur: RAUWEL, Gaëtan, 59260 Hellemmes (FR); Letartre, Bertrand, 59260 Hellemmes (FR); Criquelion, Jacques, 59260 Hellemmes (FR); Rataj, Véronique, 59710 Pont-a-Marcq (FR); Aubry, Jean-Marie, 62590 Oignies (FR); Leclercq, Loïc, 59650 Villeneuve d'Ascq (FR)
(74) Mandataire: Bureau Duthoit Legros Associés

(56) Documents cités:
- EP-A1- 1 634 942
- EP-A2- 1 818 389
- WO-A1-94/05753
- WO-A1-98/40452
- WO-A2-02/26268
- WO-A2-2008/122773
- WO-A2-2010/027863
- FR-A1- 2 693 738
- GB-A- 2 304 115
- GB-A- 2 433 510
- US-A- 3 965 026
- US-A- 6 013 615

## Description

La présente invention concerne des compositions désinfectantes et détergentes et leur utilisation dans le nettoyage et/ou la désinfection de matériels.

L'usage de certains matériels, en particulier ceux utilisés en milieu médical requiert une étape préalable de nettoyage et désinfection.

La désinfection est destinée à détruire des agents pathogènes tels que les bactéries, les virus, les champignons comme par exemple les moisissures et les levures, ou autres microorganismes. Elle permet donc d'éviter la transmission de ces agents pathogènes à l'Homme. Elle est effectuée couramment par tout un chacun dans son habitation et de manière systématique en milieu hospitalier, dans le secteur médical ou paramédical, vétérinaire, dans le domaine de la pharmacie, des cosmétiques et de l'agroalimentaire. Plus particulièrement, la désinfection de matériels est obligatoire en milieu médical ou vétérinaire, notamment dans les cliniques et les hôpitaux et ce afin d'éviter entre autres la transmission de maladies nosocomiales.

Il existe de nombreuses compositions désinfectantes utilisables directement ou sous forme de concentré à diluer dans de l'eau qui sont employées en milieu médical. Parmi celles-ci, les compositions comprenant des sels d'ammoniums quaternaires bicaténaires à longue(s) chaîne(s) alkyle(s) tels que le chlorure de didécyldiméthylammonium sont d'un usage très répandu.

Ces sels d'ammoniums quaternaires ont un effet bactéricide ou bactériostatique sur les bactéries à gram positif ou négatif. Ils présentent également des activités fongicides ou fongistatiques, levuricides et anti-moisissures. Il est donc avantageux de les utiliser en raison de leur large spectre d'action biocide.

Outre leur activité biocide, ces sels d'ammoniums quaternaires possèdent également des propriétés tensioactives.

De manière générale, les compositions désinfectantes couramment utilisées comprennent en outre un ou plusieurs autre(s) agent(s) tensioactif(s) amphotères ou non-ioniques tels que les alcools gras polyalcoxylés, notamment polyéthoxylés. Des compositions désinfectantes comprenant un chlorure d'ammonium quaternaire et un alcool gras polyéthoxylé sont par exemple connues des documents WO 01/35743 et FR 2695297.

Des compositions désinfectantes comprenant un ammonium quaternaire et des mélanges d'alcools éthoxylés ayant différentes longueurs de chaines carbonées sont également décrites dans l'art antérieur. Le document WO 02/026268 cite par exemple une composition comprenant des alcools linéaires en C₆-C₁₁ éthoxylés, et le document EP 1818389 divulgue une composition comprenant des alcools alcoxylés en C₉₋₁₃.

La demanderesse a maintenant observé que l'ajout de tensioactifs non-ioniques de type alcool gras polyéthoxylé à des compositions désinfectantes à base de sels d'ammoniums quaternaires diminuait l'activité biocide de ces dernières. Par exemple, l'ajout d'éthoxylat d'*iso*-tridécanol C₁₃H₂₇O(CH₂CH₂O)₈H (a titre d'exemple le Lutensol TO89®) à une composition désinfectante comprenant un sel d'ammonium quaternaire de formule A 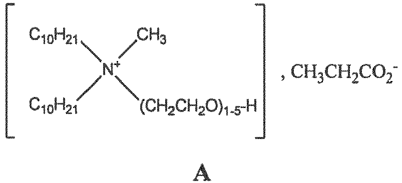 diminue, voire inhibe selon les concentrations utilisées, l'activité levuricide (déterminée selon la norme NF EN 13624).

La demanderesse a également obtenu des résultats similaires avec l'association de tensioactif non-ionique C₁₂H₂₅O(CH₂CH₂O)₈H avec du chlorure de didécyldiméthylammonium.

La demanderesse a ainsi pu démontrer que la combinaison d'un agent biocide de la famille des sels d'ammoniums quaternaires et d'un tensioactif non-ionique de la famille des alcools gras polyéthoxylés pouvait altérer l'activité biocide d'une composition désinfectante les contenant. Ceci pourrait expliquer pourquoi les compositions désinfectantes comprenant un alcool gras polyéthoxylé et un sel d'ammonium quaternaire contiennent généralement une quantité considérable de sel d'ammonium quaternaire ce qui par ailleurs augmente de manière importante leur coût et a un impact environnemental négatif après leur usage.

Les sels d'ammoniums quaternaires, de par leur large spectre d'action biocide, sont d'un intérêt primordial et ce malgré leur coût élevé en raison duquel il convient de minimiser leur teneur dans les compositions désinfectantes les contenant. D'autre part, il est particulièrement avantageux d'utiliser un tensioactif non-ionique pour des questions de non interactions ioniques.

Il y a par conséquent un réel besoin et avantage de trouver des compositions désinfectantes comprenant un sel d'ammonium quaternaire et un tensioactif non-ionique de type alcool gras polyéthoxylé (CᵢEⱼ, ou «i» représente le nombre de carbone de la chaine alkyle et «j» le nombre de motifs d'oxydes d'éthylène) qui ont une activité biocide, et en particulier levuricide, satisfaisant aux exigences sanitaires requises en milieu médical.

Il est du mérite de la demanderesse d'avoir, après de longs travaux de recherche, mis au point une composition désinfectante et détergente comprenant un sel d'ammonium quaternaire et un autre tensioactif non-ionique de type alcool gras polyéthoxylé qui répond à ces critères.

Un objet de la présente invention est donc de proposer une composition désinfectante et détergente permettant de réduire la teneur en sel d'ammonium quaternaire par rapport aux compositions actuellement commercialisées tout en maintenant une bonne activité biocide, notamment levuricide, et un bon pouvoir détergent. Par conséquent, l'activité biocide de l'ammonium quaternaire (quats) dans le mélange quats / CᵢEⱼ reste similaire à l'activité biocide de l'ammonium quaternaire pur.

La présente invention concerne donc une composition désinfectante et détergente comprenant un sel d'ammonium quaternaire et un tensioactif non-ionique de type alcool polyéthoxylé, et caractérisée en ce que ce tensioactif est constitué d'un alcool en C₁₀ polyéthoxylé de formule C₁₀H₂₁O(CH₂CH₂O)ⱼH (C₁₀Eⱼ) (à titre d'exemple le Mergital® D8) dans laquelle le degré d'éthoxylation j est égal à 8 ou environ 8.

La présente invention concerne également l'utilisation de compositions selon l'invention dans la désinfection de matériels, notamment à usage médical.

Contrairement aux compositions comprenant un sel d'ammonium quaternaire et un tensioactif non-ionique de type alcool en C₁₂ ou en C₁₃ polyéthoxylé tel que l'*iso*-C₁₃H₂₇O(CH₂CH₂O)₈H ou le C₁₂H₂₅O(CH₂CH₂O)₈H, on n'observe aucune altération substantielle de l'activité biocide de l'ammonium quaternaire lors de l'ajout du tensioactif non-ionique selon l'invention.

La demanderesse, sans toutefois vouloir être limitée à une quelconque théorie, a démontré l'existence d'un lien entre la concentration micellaire critique (CMC) du tensioactif non-ionique et la diminution de l'activité biocide du sel d'ammonium quaternaire. En effet, lorsque la concentration en tensioactif non-ionique atteint et/ou dépasse sa CMC, les molécules de tensioactif se regroupent en micelles. Les micelles de tensioactif non ionique intègrent ensuite des molécules d'ammonium quaternaire en formant des micelles mixtes (ou comicelles). La formation des micelles mixtes entraînera une diminution de la concentration en ammonium quaternaires libres. L'ammonium quaternaire libre, c'est-à-dire sous la forme unimère, est la forme active de l'ammonium quaternaire. En conséquence, l'intégration de molécules d'ammonium quaternaires libres dans des comicelles diminuera voire inhibera l'activité biocide de la composition.

La CMC des tensioactifs non-ioniques alcools en C₁₀ polyéthoxylés, C₁₀E₈, utilisés dans les compositions selon l'invention est supérieure à celle des d'alcools en C₁₂ ou en C₁₃ polyéthoxylés, notamment de l'*iso-*C₁₃H₂₇O(CH₂CH₂O)₈H ou le C₁₂H₂₅O(CH₂CH₂O)₈H. Ainsi, la formation de comicelles d'ammonium quaternaire et d'alcools en C₁₀ polyéthoxylés des compositions désinfectantes selon l'invention est fortement réduite. En conséquence, la concentration en sel d'ammonium quaternaire libre des compositions selon l'invention est peu diminuée ce qui permet le maintien de l'activité biocide. Les compositions selon l'invention ne nécessitent donc pas un surdosage en sel d'ammonium quaternaire pour posséder une activité biocide, notamment levuricide, satisfaisante.

L'expression « sel d'ammonium quaternaire » selon l'invention, désigne un sel d'ammonium quaternaire de formule B 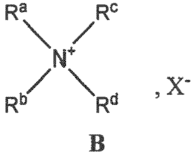 dans laquelle le groupe 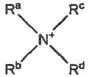 est choisi dans le groupe constitué par le benzalkonium, le benzethonium, le méthylbenzethonium, le cétylpyridinium, le cétrimonium, le dihexyldiméthylammonium, le dioctyldiméthylammonium, le didécyldiméthylammonium, le didodécyldiméthylammonium, le N,N-didécyl-N-méthyl-poly(oxyéthyl)ammonium; et X⁻ est choisi parmi le groupe constitué par le chlorure, le bromure, le propionate, l'hydrogénocarbonate et le lactate.

Avantageusement, l'ammonium quaternaire est choisi parmi les composés de formule B dans laquelle
R^{a} et R^{b} sont identiques et choisis parmi l'octyl, le décyl et le dodécyl, et
R^{c} est le méthyl, et
R^{d} est le méthyl, l'éthyl ou une chaine polyéthylène glycol en C1 à C7 (-(CH₂CH₂O)₁₋₇H),de préférence une chaine polyéthylène glycol en C1 à C5 (-(CH₂CH₂O)₁₋₅H), et
X⁻ est choisi parmi le groupe constitué par le chlorure, l'acétate, le propionate, l'hydrogénocarbonate, le lactate, de préférence le chlorure et propionate.

De préférence, l'ammonium quaternaire est le chlorure de didécyldiméthylammonium, le chlorure de didodécyldiméthylammonium, le propionate de N,N-didécyl-N-méthyl- poly(oxyéthyl)₁₋₅ammonium.

La quantité de sel d'ammonium quaternaire est comprise entre 1 et 150 mg/g de composition désinfectante, préférentiellement entre 50 et 125 mg/g, plus préférentiellement d'environ 100 mg/g.

Sous le terme « alcool en C₁₀ polyéthoxylé de formule C₁₀H₂₁O(CH₂CH₂O)ⱼH dans laquelle le degré d'éthoxylation j est de 4 à 12 », sont inclus les mélanges d'alcools en C₁₀ polyéthoxylés de formule C₁₀H₂₁O(CH₂CH₂O)ₘH dans laquelle m est un nombre entier allant de 4 à 12. Dans le cas d'un mélange, le degré d'éthoxylation j est une valeur moyenne étant calculée comme la somme du nombre de motifs d'oxydes d'éthylène m de chaque composé alcool en C₁₀ polyéthoxylé constituant ledit mélange divisée par le nombre de composés constituant ledit mélange. Dans d'autres termes la formule C₁₀H₂₁O(CH₂CH₂O)ⱼH couvre aussi bien les composés purs que les mélanges de composés, dans ce dernier cas le degré d'éthoxylation étant une moyenne numérique, dont la valeur j est éventuellement arrondie au nombre entier le plus proche.

Dans l'invention, l'alcool en C₁₀ polyéthoxylé de formule C₁₀H₂₁O(CH₂CH₂)OⱼH a un degré d'éthoxylation j égal à 8 ou environ 8.

La quantité de tensioactif non-ionique alcool en C₁₀ polyéthoxylé est comprise entre 1 et 200 mg/g de composition désinfectante, préférentiellement entre 50 et 150 mg/g, plus préférentiellement d'environ 100 mg/g.

Dans un mode de réalisation, la quantité de sel d'ammonium quaternaire est comprise entre 1 et 150 mg/g de composition désinfectante et celle de d'alcool en C10 polyéthoxylé entre 1 et 200 mg/g de composition désinfectante. De préférence, la quantité de sel d'ammonium quaternaire est comprise entre 50 et 100 mg/g de composition désinfectante et celle de d'alcool en C10 polyéthoxylé entre 50 et 150 mg/g de composition désinfectante, préférentiellement la quantité de sel d'ammonium quaternaire est d'environ 100 mg/g de composition désinfectante et celle de d'alcool en C10 polyéthoxylé entre d'environ 100 mg/g de composition désinfectante.

La composition selon l'invention se présente généralement sous la forme d'une solution aqueuse. On utilisera avantageusement pour sa préparation de l'eau distillée ou déminéralisée, ayant éventuellement subie une filtration sur une membrane de faible porosité, de préférence de 0.2 µm.

Dans un mode de réalisation, la composition selon l'invention est caractérisée en ce qu'elle se présente sous forme d'un concentré liquide comprenant de 5 à 80 %, préférentiellement environ 50 %, en poids d'eau rapporté au poids total de la composition.

Dans un autre mode de réalisation, la composition selon l'invention comprend de 99 à 99.95 %, préférentiellement environ 99.5 %, en volume d'eau rapporté au volume total de la composition. De telles compositions sont obtenues par dilution de 100 à 500 fois, préférentiellement d'environ 200 fois de la composition liquide concentrée décrite plus haut.

Il est également avantageux d'ajuster le pH de la composition selon l'invention par ajout d'un acide minéral ou organique ou d'une base minérale ou organique selon le pH souhaité. De préférence, le pH de la composition selon l'invention est neutre à légèrement alcalin c'est-à-dire compris environ entre 6 et 10.

L'acide minéral ou organique est par exemple choisi dans le groupe constitué par l'acide méthane sulfonique, l'acide lactique, l'acide phosphorique, l'acide glycolique, l'acide acétique.

La base minérale ou organique est par exemple choisie dans le groupe constitué par l'hydroxyde de sodium, l'hydroxyde de potassium, la monoéthanolamine, la triéthanolamine, le carbonate de sodium.

La composition selon l'invention peut en outre comprendre un ou plusieurs agent(s) antimicrobien(s) supplémentaire(s) en combinaison avec l'ammonium quaternaire ; cela permet d'élargir le spectre antimicrobien de la composition.

La composition selon l'invention peut aussi comprendre un ou plusieurs agents antimicrobien(s) supplémentaire(s) choisi(s) dans le groupe constitué par la chlorhéxidine, le gluconate de chlorhéxidine, le digluconate de chlorhéxidine, l'acétate de chlorhéxidine, le diacétate de chlorhéxidine, le chlorhydrate de chlorhéxidine et le dichlorhydrate de chlorhéxidine, le polyhexaméthylène biguanide (PHMB), le chlorhydrate de polyhexaméthylène biguanide (PHMB-HCl), polyaminopropylbiguanide (PAPB), la laurylamine, la N-(3-aminopropyl)-N-dodécylpropane-1,3-diamine, la bis-(aminopropyl)laurylamine, la tétra-acétyl éthylène diamine, le phénoxy ethanol et le phénoxy propanol, préférentiellement le digluconate de chlorhéxidine, le polyhexaméthylène biguanide (PHMB), le chlorhydrate de polyhexaméthylène biguanide (PHMB-HCl), la N-(3-aminopropyl)-N-dodécylpropane-1,3-diamine et la bis-(aminopropyl)laurylamine.

Les propriétés détersives de la composition peuvent également être obtenues avec un complexe enzymatique, ce dernier étant constitué d'une ou plusieurs enzymes choisies parmi les lipases, les protéases, les amylases, les mannanases et/ou les pectinases, de préférence le complexe enzymatique est constitué de protéase, lipase et amylase.

La composition selon l'invention peut comprendre en outre du chlorhydrate de polyhexaméthylène biguanide (PHMB-HCl).

Avantageusement, la quantité de PHMB-HCl contenue dans la composition selon l'invention est comprise entre 0.1 et 50 mg/g de composition désinfectante, préférentiellement entre 0.2 et 1 mg/g, plus préférentiellement d'environ 0.24 mg/g.

Dans un mode de réalisation préféré, la composition selon l'invention comprend :
- entre 1 et 150 mg/g de composition désinfectante et détergente, préférentiellement entre 50 et 125 mg/g, plus préférentiellement environ 100 mg/g, de chlorure de didécyldiméthylammonium ou de propionate de N,N-didécyl-N-méthyl-poly(oxyéthyl)ammonium, et
- entre 1 et 200 mg/g de composition désinfectante et détergente, préférentiellement entre 50 et 150 mg/g, plus préférentiellement environ 100 mg/g, de C₁₀H₂₁O(CH₂CH₂O)₈H.

La composition selon l'invention peut comprendre en outre un ou plusieurs autre(s) tensioactif(s) choisi(s) parmi les tensioactifs amphotères ou non-ioniques ; cela confère à la composition des propriétés détergentes additionnelles.

L'impact des tensioactifs sur l'environnement étant non négligeable, seront ainsi privilégiés les tensioactifs biodégradables, non écotoxiques et/ou issus de matières premières renouvelables.

De préférence, la composition selon l'invention peut en outre comprendre un ou plusieurs tensioactif(s) non-ionique(s) choisi(s) parmi les alkylpolyglucosides, les alkylpolypentosides et/ou les polyglycosides, préférentiellement parmi les alkylpolyglucosides.

Les alkylpolyglucosides sont préparés industriellement à partir de matières premières renouvelables et sont biodégradables. Ils ne sont pas, contrairement à de nombreux tensioactifs, écotoxiques et sont ainsi particulièrement d'intérêt dans le développement de compositions « vertes » ou dont l'impact environnemental est réduit.

Avantageusement, l'alkylpolyglucoside est choisi dans le groupe constitué par les glucosides de *n*-octyle (n° CAS 29836-26-8), les glucosides de décyle (n° CAS 68515-73-1, 141464-42-8, 54549-25-6, 58846-77-8), les glucosides de lauryle (n° CAS 110615-47-9, 27836-64-2) et les mélanges de ceux-ci.

De préférence, l'alkylpolyglucoside est le coco glucoside qui est un mélange de glucoside de décyle (n° CAS 68515-73-1) et de glucoside de lauryle (n° CAS 110615-47-9). De façon générale l'alkylpolyglucoside est de formule H-(C6H10O5)n-O-CiH2i+1 où n représente le degré de polymérisation, c'est-à-dire le nombre moyen d'unités de D-glucose i le nombre d'atomes de carbone de la chaîne alkyle, ou le composé de formule C :

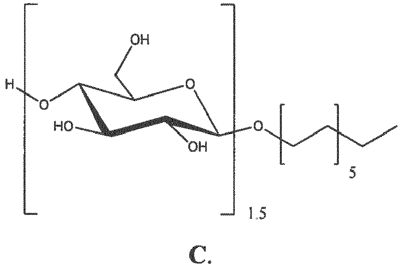

La composition selon l'invention peut comprendre en outre un chélatant choisi dans le groupe constitué par l'acide éthylène diamine tétra-acétique (EDTA), l'acide diéthylène triamine penta acétique (DTPA), l'iminodisuccinate de sodium (IDS), le methylglycinediacétate de sodium (MGDA), glutamine(L)diacétate de sodium (GLDA).

La composition selon l'invention comprend en outre un ou plusieurs excipient(s) choisi(s) dans le groupe constitué par les émulsifiants, notamment les hydrotropes, les tiers-solvants de type polyol tels que le glycérol.

L'expression « hydrotrope » selon l'invention, désigne notamment, sans s'y limiter, le *para*-toluènesulfonate de sodium, le xylènesulfonate de sodium.

La composition selon l'invention peut en outre comprendre d'autres agents couramment utilisés dans le domaine des désinfectants tels qu'un ou plusieurs parfum(s), de préférence non-allergène(s) et non-sensibilisant(s), et/ou un ou plusieurs colorant(s).

En effet, il est courant d'ajouter un colorant à ces compositions afin de les distinguer clairement les unes des autres et éviter qu'elles soient confondues entre elles par l'utilisateur.

La composition selon l'invention est caractérisée en ce qu'elle se présente sous forme d'un liquide, éventuellement coloré, qui s'écoule et se transvase facilement et qui préférentiellement se mélange / solubilise instantanément en dilution dans l'eau.

Ce concentré liquide est destiné à être dilué dans de l'eau, par exemple de l'eau du robinet, de l'eau distillée, déminéralisée ou purifiée. La solution diluée obtenue est limpide et éventuellement légèrement colorée. Pour l'utilisation optimale dudit concentré liquide, une dose (environ 20 ou 25 ml) est diluée dans environ 5 L d'eau.

La solution obtenue possédant les propriétés désinfectantes, et nettoyantes souhaitées, elle peut ensuite être appliquée sur des matériels.

Un autre objet de l'invention est donc l'utilisation d'une composition désinfectante et détergente selon l'invention dans la désinfection de matériels, notamment de matériels à usage médical, paramédical, vétérinaire, pharmaceutique ou agro-alimentaire.

A titre d'exemple de matériels à usage médical au sens de la présente invention on peut citer les instruments chirurgicaux tels que les pinces, ciseaux, aiguilles, scalpels, bistouris, les instruments médicaux tels que des endoscopes, tubes et tuyaux, les bassines et bacs de désinfection.

L'invention concerne par conséquent un procédé de désinfection dans lequel au moins un matériel, notamment à usage médical, est trempé dans une solution aqueuse d'une composition désinfectante et détergente selon l'invention, et ensuite éventuellement rincé avec de l'eau.

Dans un mode de réalisation, les matériels sont trempés pendant 5 à 15 minutes dans une composition diluée. Il est avantageux, notamment dans le cas de matériel endoscopique d'effectuer un double nettoyage : avec un premier trempage de 10 minutes, rinçage à l'eau puis un second trempage de 5 minutes.

Les exemples ci-après sont donnés afin d'illustrer l'invention mais ne sont en rien limitatifs quant à la portée de l'invention et des revendications.

### EXEMPLES

Les abréviations suivantes sont utilisées : BSA : albumine de sérum bovin, ufc : unité formant une colonie, g : gramme(s) ; h : heure(s), L : litre(s), m : mètre(s), mg : milligramme(s), ml : millilitre(s), min. : minute(s), mM : milli molaire(s), s : seconde(s).

Les composés de formule C₁₀H₂₁O(CH₂CH₂O)ⱼH seront désignés par le terme C₁₀Eⱼ.

La fraction molaire de sel d'ammonium α₁ est calculée selon la formule : α₁ = [AMM] / ([AMM] + [C₁₀Eⱼ]), dans laquelle [AMM] désigne la concentration de sel d'ammonium dans la composition et [C₁₀Eⱼ] celle de l'alcool en C₁₀ polyéthoxylé.

Sauf spécification contraire, les quantités de composé sont exprimées en mg de composé par g de composition désinfectante (mg/g).

### Tests des activités biocides.

La demanderesse a choisi de tester l'activité biocide des compositions désinfectantes selon l'invention et des compositions de référence sur des modèles reconnus selon les normes européennes et ce dans des conditions de saleté.

Les conditions de saleté sont mimées dans les tests biocides par l'ajout d'érythrocytes de mouton en concentration de 3 ml/L et de BSA en concentration de 0.3 à 3 g/L, et par l'emploi d'une eau dure (titre hydrotimétrique TH=30 °f).

### 1- Activité levuricide selon la norme NF EN 13624

L'essai a été réalisé avec la levure *Candida albicans* (ATCC 10231) qui est l'espèce de levure du genre *Candida* la plus importante. Elle provoque des infections fongiques (candidose) qui peuvent devenir systémiques (candidémies), ces dernières pouvant être létales. *Candida albicans* est un pathogène qui peut être responsable de divers types d'infections, en particulier chez les patients immunodéprimés.

Un échantillon de composition éventuellement dilué dans de l'eau, est ajouté à une suspension de cellules de levure en conditions de saleté. Le nombre de cellules de levure dans la suspension a été ajusté entre 1,5 et 5 × 10⁷ ufc/ml. Le mélange a été maintenu à 20 ± 1 °C pendant 15 min ± 10 s. A la fin de ce temps de contact, un aliquot a été prélevé et son activité biocide immédiatement neutralisée ou supprimée par une méthode de dilution/neutralisation, telle que reprise dans la norme NF EN 13624. Le nombre de cellules de levures survivantes est mesuré pour chaque échantillon. La réduction, définie comme le ratio entre le nombre de cellules dans la suspension de test au début du temps de contact et le nombre de cellules survivantes, a ensuite été calculée et est exprimée en logarithme. La composition désinfectante est considérée active si la réduction est supérieure à 4 log.

La concentration biocide minimale (CBM) correspond à la plus faible concentration d'antimicrobien, exprimée en mg/L ou mM, capable in vitro, d'entraîner une réduction significative du nombre des microorganismes (soit 4 log pour être en conformité avec les exigences de la NF EN 13624).

La concentration biocide minimale de compositions selon l'invention comprenant un sel d'ammonium quaternaire et un alcool en C₁₀ polyéthoxylé sera désignée par le terme CBM*.

### 2- Activité bactéricide selon la norme NF EN 13727

L'essai a été réalisé avec la souche bactérienne *Pseudomonas aeruginosa* qui est particulièrement pathogène et très résistante. Avec d'autres bactéries à gram-négatif, elle est de plus en plus souvent responsable d'infections nosocomiales. C'est l'une des bactéries les plus difficiles à traiter cliniquement, le taux de mortalité atteint 50% chez les patients vulnérables (immunodéprimés).

L'essai a été également réalisé avec la souche bactérienne *Staphyloccocus aureus* qui est l'espèce la plus pathogène du genre *Staphyloccocus.* Cette bactérie à gram positif a un pouvoir invasif fort pouvant entraîner des septicémies, lesquelles peuvent être létales si elles ne sont pas prises en charge très rapidement. Elle peut également produire et libérer des toxines chez les patients infectés et certaines souches sont résistantes aux antibiotiques.

Le mode opératoire pour ces deux essais est :
Un échantillon de composition éventuellement dilué dans de l'eau, est ajouté à une suspension de cellules bactériennes en conditions de saleté. Le nombre de cellules bactériennes dans la suspension a été ajusté entre 1,5 et 5 × 10⁷ ufc/mL. Le mélange a été maintenu à 20 ± 1 °C pendant 5 min ± 10 s. A la fin de ce temps de contact, un aliquot a été prélevé et son activité biocide immédiatement neutralisée ou supprimée par une méthode de dilution/neutralisation, telle que reprise dans la norme NF EN 13624. Le nombre de cellules bactériennes survivantes est mesuré pour chaque échantillon. La réduction, définie comme le ratio entre le nombre de cellules dans la suspension de test au début du temps de contact et le nombre de cellules survivantes, a ensuite été calculée et est exprimée en logarithme. La composition désinfectante est considérée active si la réduction est supérieure à 5 log.

La concentration biocide minimale de compositions comprenant un sel d'ammonium quaternaire et un alcool en C₁₀ polyéthoxylé sera désignée par le terme CBM*.

### Exemple 1: préparation de compositions connus dans l'art et détermination de leur activité levuricide.

Les compositions T1, T1', T2 et T2' ont été préparées, ces compositions comprennent un ammonium quaternaire et un alcool en C₁₃ polyéthoxylé dans de l'eau et sont décrites dans la table 1.

**Table 1**

| **Composition** | **Sel d'ammonium** | **Concentration en ammonium** | **Concentration en** *iso*-C₁₃H₂₇-O(CH₂CH₂O)₈H |
|---|---|---|---|
| T1 | chlorure de didécyldiméthyl ammonium | 100 mM | 0 |
| T1' | | 100 mM | 100 mM |
| T2 | 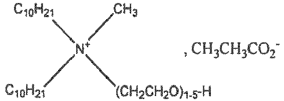 | 140 mM | 0 |
| T2' | | 140 mM | 100 mM |

Chacune de ces compositions a été diluée dans de l'eau dure à 0.5 % v/v et l'activité levuricide sur *Candida Albicans* des solutions obtenues a été mesurée. Les résultats sont décrits dans la table 2.

**Table 2**

| **Solution diluée de la composition** | **Activité levuricide (log)** |
|---|---|
| T1 | > 4.1 |
| T1' | 2,8 log |
| T2 | > 4,1 |
| T2' | 3,5 log |

### Analyse des résultats

Ces résultats montrent que l'activité levuricide de solutions de sels d'ammoniums quaternaires est diminuée par l'ajout d'un tensioactif non-ionique de type alcool en C₁₃ polyéthoxylé. L'activité levuricide de telles compositions ne satisfait pas aux critères d'activité que leur utilisation en milieu hospitalier exige.

### Exemple 2 : préparation de compositions selon 1' et de compositions de référence et détermination de leur activité levuricide.

Des compositions comprenant du chlorure de didécyldiméthylammonium et un alcool en C₁₀ polyéthoxylé dans de l'eau ont été préparées. Ces compositions se distinguent de par la nature de l'alcool polyéthoxylé utilisé (C₁₀Ej, j=4, 6 ou 8) et leurs différentes fractions molaires en sel d'ammonium α₁.

L'activité levuricide sur *Candida Albicans* de solutions diluées de ces compositions a été mesurée et les valeurs de concentration biocide minimale (CBM*) exprimées en mM sont rapportées dans la table 3.

**Table 3**

| α₁ | **C₁₀E₄** | **C₁₀E₆** | **C₁₀E₈** |
|---|---|---|---|
| 0.25 | 0.26 | 0.24 | 0.25 |
| 0.35 | 0.24 | 0.24 | 0.23 |
| 0.50 | 0.24 | 0.22 | 0.22 |
| 0.65 | 0.22 | 0.22 | 0.21 |
| 0.75 | 0.21 | 0.21 | 0.21 |
| 1 | 0.21 | 0.21 | 0.21 |

### Analyse des résultats

Les compositions dans lesquelles α₁ = 1 ne contiennent que du chlorure de didécyldiméthylammonium. La CBM de ce dernier est donc de 0.21 mM.

Les résultats de la table 3 montrent que l'activité biocide (CBM*) des compositions selon l'invention est sensiblement identique voire égale à celle du chlorure de didécyldiméthylammonium seul et ce quelque soit 1) l'alcool en C₁₀ polyéthoxylé utilisé et 2) la fraction molaire en sel d'ammonium α₁.

L'activité levuricide de telles compositions satisfait aux critères d'activité que leur utilisation en milieu hospitalier exige. De plus, l'homme du métier peut librement ajuster la quantité de tensioactif C₁₀Eⱼ selon ses besoins sans grande contrainte par rapport à la rétention de l'activité levuricide. De préférence, le C₁₀E₈ sera choisi.

Enfin, ces compositions ont une très bonne activité levuricide pour des fractions molaires en sel d'ammonium quaternaire faibles pouvant descendre jusqu'à 0.25.

### Exemple 3 : préparation de compositions selon l'invention et de compositions de référence et détermination de leur activité levuricide.

Les compositions A1 à A8 comprenant du chlorure de didécyldiméthylammonium, un alcool en C₁₀ polyéthoxylé et un alkylpolyglucoside (noté G650) dans de l'eau, dans des gammes de concentrations différentes, ont été préparées et sont décrites dans la table 4.

L'activité levuricide sur *Candida Albicans* de solutions diluées de ces compositions, dans des rapports de dilutions de 0.25, 0.5, 1 et 1.5 % (v/v) est également décrite dans la table 4.

**Table 4**

| | **A1** | **A2** | **A3** | **A4** | **A5** | **A6** | **A7** | **A8** |
|---|---|---|---|---|---|---|---|---|
| [DiC10][C1] | 60 mM | 60 mM | 60 mM | 60 mM | 60 mM | 60 mM | 60 mM | 60 mM |
| G650 | - | 180 mM | 135 mM | 90 mM | 45 mM | 135 mM | 90 mM | 45 mM |
| C10E8 | - | - | 45 mM | 90 mM | 135 mM | - | - | - |
| C12E8 | - | - | - | - | - | 45 mM | 90 mM | 135 mM |

| **Dilution en % (v/v)** | **Activité levuricide** | | | | | | | |
|---|---|---|---|---|---|---|---|---|
| 0,25 | < 2.7 log | 3.5 log | 3.3 log | 3.6 log | 3.7 log | < 2.7 log | < 2.7 log | < 2.7 log |
| 0,5 | > 4.1 log | > 4.1 log | 3.7 log | > 4.2 log | 4.0 log | < 2,7 log | < 2.7 log | < 2.7 log |
| 1 | > 4.1 log | > 4.1 log | > 4.2 log | > 4.2 log | > 4.2 log | 3.1 log | < 2.7 log | < 2.7 log |
| 1,5 | > 4.1 log | > 4.1 log | > 4.2 log | > 4.2 log | > 4.2 log | 3.5 log | 3.3 log | < 2.7 log |

Les dénominations reprises dans la table 4 ont la signification suivante :
[DiC10][Cl] : chlorure de didécyldiméthylammonium
C₁₂E₈ : C₁₂H₂₃-O(CH₂CH₂O)₈H
G650: coco glucoside.

### Analyse des résultats

Les résultats de la table 4 montrent :
1) que l'alcool polyéthoxylé C₁₀H₂₁-O(CH₂CH₂O)₈H ne réduit pas l'activité levuricide du chlorure de didécyldiméthylammonium (compositions A4 et A5) ;
2) que le facteur de dilution en % (v/v) doit être supérieur ou égal à 0.5 %;
3) que le coco glucoside n'altère pas l'activité levuricide du chlorure de didécyldiméthylammonium (composition A2).

Dans sa recherche de compositions désinfectantes la demanderesse a considéré les critères suivants :
a) une activité levuricide > 4 log
b) à un facteur de dilution en % (v/v) faible
c) l'utilisation de matières premières issues de ressources renouvelables
d) coût en matières premières pas trop élevé.

Plusieurs compositions de la table 3 répondent à ces critères.

En particulier, la composition A4 est une composition désinfectante concentrée comprenant un ammonium quaternaire en faible concentration de 60mM, un alcool en C10 polyéthoxylé et comprenant en outre un alkyl polyglucoside, qui a une activité levuricide supérieure à 4.2 log en dilution à 0.5 % (v/v).

La demanderesse a observé que contrairement aux compositions selon l'invention qui comprennent un alcool en C₁₀ polyéthoxylé, l'emploi d'alcool en C₁₂ polyéthoxylé ne convenait pas (compositions A6 à A8). En effet, la comicellisation des sels d'ammonium quaternaires et des C₁₂E₈ est plus importante qu'avec les C₁₀E₈ et pourrait expliquer cette baisse de l'activité biocide. De surcroît, les C₁₀E₈ ont une toxicité et une écotoxicité plus réduites que les C₁₂E₈ ou les C₁₃E₈.

L'activité levuricide de telles compositions satisfait aux critères d'activité que leur utilisation en milieu hospitalier exige.

### Exemple 4 : préparation de compositions selon l'invention et détermination de leur activité bactéricide.

Les compositions B1 à B3 comprenant du chlorure de didécyldiméthylammonium, un alcool en C₁₀ polyéthoxylé dans de l'eau, dans des gammes de concentrations différentes, ont été préparées et sont décrites dans la table 5.

L'activité biocide de solutions diluées de ces compositions, dans des rapports de dilutions allant de 0.25 à 5 % (v/v) est également décrite dans la table 5.

**Table 5**

| **I** | | Témoin [DiC10][Cl] | **Ref.** : [DiC10][Cl] / C₁₀E₈ | | |
|---|---|---|---|---|---|
| | | | **B1** : 25 / 75 | **B2:** 50 / 50 | **B3:** 75 / 25 |
| | Concentration [DiC10][Cl] | 60 mM | 60 mM | 60 mM | 60 mM |
| | Concentration [C₁₀E₈] | 0 | 180 mM | 60 mM | 20 mM |
| Souches / norme | % dilution | | | | |
| *Candida Albicans* / *NF EN 13 624* | 0,25% | < 2,8 log | < 2,9 log | < 2,8 log | 3,4 log |
| | 0,5% | > 4,1 log | > 4,1 log | > 4,1 log | > 4,1 log |
| | 0,75% | > 4,1 log | > 4,1 log | > 4,1 log | > 4,1 log |
| | 1% | > 4,1 log | > 4,1 log | > 4,1 log | > 4,1 log |
| *Staphyloccocus Aureus* / *NF EN 13 727* | 0,25% | > 5,6 log | > 5,6 log | > 5,6 log | > 5,6 log |
| | 0,5% | > 5,6 log | > 5,6 log | > 5,6 log | > 5,6 log |
| | 0,75% | > 5,6 log | > 5,6 log | > 5,6 log | > 5,6 log |
| | 1% | > 5,6 log | > 5,6 log | > 5,6 log | > 5,6 log |
| *Pseudomonas Aeruginosa* / *NF EN 13 727* | 0,5% | < 3,7 log | < 3,9 log | < 3,9 log | < 3,7 log |
| | 0,75% | < 3,7 log | < 3,9 log | < 3,9 log | < 3,7 log |
| | 1% | < 3,7 log | < 3,9 log | < 3,9 log | < 3,7 log |
| | 1,5% | < 3,7 log | < 3,9 log | 4 log | < 3,7 log |
| | 2% | 4,7 log | < 3,9 log | > 5,1 log | 4,3 log |
| | 2,5% | > 5,1 log | < 3,7 log | > 5,1 log | > 5,1 log |
| | 5% | > 5,1 log | 4,1 log | > 5,1 log | > 5,1 log |

### Analyse des résultats

Les résultats de la table 5
1) confirment l'activité levuricide des compositions selon l'invention ;
2) montrent leur très bonne activité bactéricide sur *Staphyloccocus aureus* ;
3) montrent une activité bactéricide sur *Pseudomonas aeruginosa* des compositions selon l'invention au moins équivalente à celle du chlorure de didécyldiméthylammonium seul, dans la mesure où le α₁ est supérieur ou égal à 0,5.

En particulier, la composition B2 qui a une concentration en sel d'ammonium de 60 mM et en C₁₀E₈ de 60 mM également, montre en dilution supérieure ou égale à 2 % (v/v) la meilleure activité biocide.

Ces compositions selon l'invention ont une bonne activité bactéricide et levuricide satisfaisant aux normes européennes.

## Revendications

1. Composition désinfectante et détergente comprenant un sel d'ammonium quaternaire et un tensioactif non-ionique de type alcool polyéthoxylé, et **caractérisée en ce que** ce tensioactif est constitué d'un alcool en C₁₀ polyéthoxylé de formule C₁₀H₂₁O(CH₂CH₂O)ⱼH (C₁₀Eⱼ) dans laquelle le degré d'éthoxylation j est égal à 8 ou environ 8.

2. Composition selon la revendication 1, **caractérisée en ce que** le sel d'ammonium quaternaire est choisi parmi les composés de formule B 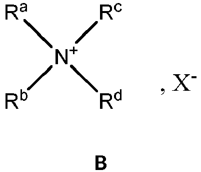 dans laquelle le groupe 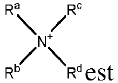 choisi parmi le groupe constitué par le benzalkonium, le benzethonium, le méthylbenzethonium, le cétylpyridinium, le cétrimonium, le dihexyldiméthylammonium, le dioctyldiméthylammonium, le didécyldiméthylammonium, le
didodécyldiméthylammonium, N,N-didécyl-N-méthyl-poly(oxyéthyl)ammonium; et X- est choisi parmi le groupe constitué par le chlorure, le bromure, le propionate, l'hydrogénocarbonate et le lactate.

3. Composition selon l'une quelconque des revendications 1 et 2, **caractérisée en ce que** la quantité de sel d'ammonium quaternaire est comprise entre 1 et 150 mg/g de composition désinfectante.

4. Composition selon l'une quelconque des revendications 1 à 3, **caractérisée en ce que** la quantité de tensioactif non-ionique est comprise entre 1 et 200 mg/g de composition désinfectante.

5. Composition selon l'une quelconque des revendications 1 à 4, **caractérisée en ce qu'**elle se présente sous forme d'une solution aqueuse.

6. Composition selon l'une quelconque des revendications 1 à 5, **caractérisée en ce qu'**elle comprend en outre un ou plusieurs agent(s) antimicrobien(s) supplémentaire(s).

7. Composition selon la revendication 6, **caractérisée en ce que** le(s) agent(s) antimicrobien(s) supplémentaire(s) est/sont choisi(s) parmi le digluconate de chlorhéxidine, le polyhexaméthylène biguanide (PHMB), le chlorhydrate de polyhexaméthylène biguanide (PHMB-HCl), la N-(3-aminopropyl)-N-dodécylpropane-1,3-diamine, la bis-(aminopropyl)laurylamine, et le complexe enzymatique constitué de protéase, lipase et/ou amylase

8. Composition selon la revendication 7, **caractérisée en ce que** l'agent antimicrobien supplémentaire est le chlorhydrate de polyhexaméthylène biguanide (PHMB-HCl).

9. Composition selon la revendication 8, **caractérisée en ce que** la quantité de PHMB-HCL est comprise entre 0.1 et 50 mg/g de composition désinfectante.

10. Composition selon l'une quelconque des revendications 1 à 9, **caractérisée en ce qu'**elle comprend en outre un ou plusieurs autre(s) tensioactif(s) choisi(s) parmi les tensioactifs amphotères ou non-ioniques.

11. Composition selon la revendication 10, **caractérisée en ce que** le(s) tensioactif(s) est/sont choisi(s) parmi les alkylpolyglucosides, les alkylpolypentosides et/ou les polyglycosides.

12. Utilisation d'une composition désinfectante et détergente selon l'une quelconque des revendications 1 à 11 pour la désinfection de matériels.

13. Utilisation selon la revendication 12, **caractérisée en ce que** les matériels sont à usage médical, paramédical, vétérinaire, pharmaceutique ou agro-alimentaire.

14. Procédé de désinfection dans lequel au moins un matériel est trempé dans une solution aqueuse d'une composition désinfectante et détergente selon l'une quelconque des revendications 1 à 11, et ensuite éventuellement rincé avec de l'eau.

15. Procédé selon la revendication 14, **caractérisé en ce que** le matériel est à usage médical.

## Patentansprüche

1. Desinfektions- und Reinigungszusammensetzung, umfassend ein quaternäres Ammoniumsalz und einen nicht ionischen grenzflächenaktiven Stoff vom Typ eines polyethoxylierten Alkohols, und **dadurch gekennzeichnet, dass** der grenzflächenaktive Stoff aus einem polyethoxylierten C₁₀-Alkohol mit der Formel C₁₀H₂₁O(CH₂CH₂O)ⱼH(C₁₀Eⱼ) besteht, wobei der Ethoxylierungsgrad j gleich 8 oder ungefähr 8 ist.

2. Zusammensetzung nach Anspruch 1, **dadurch gekennzeichnet, dass** das quaternäre Ammoniumsalz ausgewählt ist aus den Verbindungen mit der Formel B: 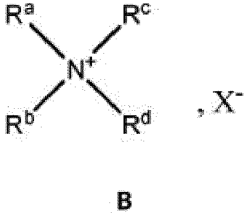 wobei die Gruppe 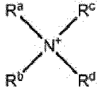 ausgewählt ist aus der Gruppe bestehend aus Benzalkonium, Benzethonium, Methylbenzethonium, Cetylpyridinium, Cetrimonium, Dihexyldimethylammonium, Dioctyldimethylammonium, Didecyldimethylammonium, Didocedyldimethylammonium, N,N-Didecyl-N-methylpoly-(oxyethyl)-ammonium; und X- ausgewählt ist aus der Gruppe bestehend aus Chlorid, Bromid, Propionat, Hydrogencarbonat und Lactat.

3. Zusammensetzung nach einem der Ansprüche 1 und 2, **dadurch gekennzeichnet, dass** die Menge des quaternären Ammoniumsalzes zwischen 1 und 150 mg/g der Desinfektionszusammensetzung beträgt.

4. Zusammensetzung nach einem der Ansprüche 1 bis 3, **dadurch gekennzeichnet, dass** die Menge des nicht ionischen grenzflächenaktiven Stoffs zwischen 1 und 200 mg/g der Desinfektionszusammensetzung beträgt.

5. Zusammensetzung nach einem der Ansprüche 1 bis 4, **dadurch gekennzeichnet, dass** diese in der Form einer wässrigen Lösung dargereicht wird.

6. Zusammensetzung nach einem der Ansprüche 1 bis 5, **dadurch gekennzeichnet, dass** diese außerdem ein oder mehrere ergänzende antimikrobielle Mittel umfasst.

7. Zusammensetzung nach Anspruch 6, **dadurch gekennzeichnet, dass** das (die) antimikrobielle(n) Mittel ausgewählt ist (sind) aus Chlorhexidindigluconat, Polyhexamethylenbiguanid (PHMB), Polyhexamethylenbiguanidchlorhydrat (PHMB-HCl), N-(3-Aminopropyl)-N-dodecylpropan-1,3-diamin, Bis-(aminopropyl)-laurylamin und dem enzymtischen Komplex bestehend aus Protease, Lipase und/oder Amylase.

8. Zusammensetzung nach Anspruch 7, **dadurch gekennzeichnet, dass** das ergänzende antimikrobielle Mittel Polyhexamethylenbiguanidchlorhydrat (PHMB-HCl) ist.

9. Zusammensetzung nach Anspruch 8, **dadurch gekennzeichnet, dass** die Menge von PHMB-HCl zwischen 0,1 und 50 mg/g der Desinfektionszusammensetzung beträgt.

10. Zusammensetzung nach einem der Ansprüche 1 bis 9, **dadurch gekennzeichnet, dass** diese außerdem einen oder mehrere andere grenzflächenaktiven Stoffe umfasst, der (die) aus amphoteren oder nicht ionischen grenzflächenaktiven Stoffen ausgewählt ist (sind).

11. Zusammensetzung nach Anspruch 10, **dadurch gekennzeichnet, dass** der (die) grenzflächenaktive(n) Stoff(e) ausgewählt ist (sind) aus Alkylpolyglucosiden, Alkylpolypentosiden und/oder Polyglycosiden.

12. Verwendung einer Desinfektions- und Reinigungszusammensetzung nach einem der Ansprüche 1 bis 11 zur Desinfektion von Materialien.

13. Verwendung nach Anspruch 12, **dadurch gekennzeichnet, dass** die Materialien zur medizinischen, paramedizinischen, veterinären, pharmazeutischen Verwendung oder für Lebensmittel sind.

14. Verfahren zur Desinfektion, wobei mindestens ein Material in eine wässrige Lösung einer Desinfektions- und Reinigungszusammensetzung nach einem der Ansprüche 1 bis 11 eingetaucht wird und anschließend gegebenenfalls mit Wasser gespült wird.

15. Verfahren nach Anspruch 14, **dadurch gekennzeichnet, dass** das Material zur medizinischen Verwendung ist.

## Claims

1. Disinfectant and detergent composition comprising a quaternary ammonium salt and a nonionic surfactant of the polyethoxylated alcohol type, and **characterised in that** this surfactant consists of a C₁₀ polyethoxylated alcohol of formula C₁₀H₂₁O(CH₂CH₂O)ⱼH (C₁₀Eⱼ) wherein the degree of ethoxylation j is equal to 8 or about 8.

2. Composition according to claim 1, **characterised in that** the quaternary ammonium salt is chosen from the compounds of formula B 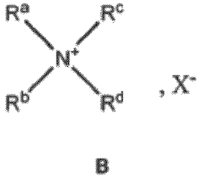 wherein the group 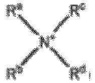 is chosen from the group consisting of benzalkonium, benzethonium, methylbenzethonium, cetylpyridinium, cetrimonium, dihexyldimethylammonium, dioctyldimethylammonium, didecyldimethylammonium, didodecyldimethylammonium, N,N-didecyl-N-methyl-poly(oxyethyl)ammonium; and X- is chosen from the group consisting of chloride, bromide, propionate, hydrogenocarbonate and lactate.

3. Composition according to any of claims 1 and 2, **characterised in that** the quantity of quaternary ammonium salt is between 1 and 150 mg/g of disinfectant composition.

4. Composition according to any of claims 1 to 3, **characterised in that** the quantity of nonionic surfactant is between 1 and 200 mg/g of disinfectant composition.

5. Composition according to any of claims 1 to 4, **characterised in that** it has the form of an aqueous solution.

6. Composition according to any of claims 1 to 5, **characterised in that** it further comprises one or several additional antimicrobial agents.

7. Composition according to claim 6, **characterised in that** the additional antimicrobial agent(s) is/are chosen from chlorhexidine digluconate, polyhexamethylene biguanide (PHMB), polyhexamethylene biguanide chlorhydrate (PHMB-HCl), N-(3-aminopropyl)-N-dodecylpropane-1,3-diamine, bis-(aminopropyl)laurylamine, and the enzyme complex comprised of protease, lipase and/or amylase.

8. Composition according to claim 7, **characterised in that** the additional antimicrobial agent is polyhexamethylene biguanide chlorhydrate (PHMB-HCl).

9. Composition according to claim 8, **characterised in that** the quantity of PHMB-HCL is between 0.1 and 50 mg/g of disinfectant composition.

10. Composition according to any of claims 1 to 9, **characterised in that** it further comprises one or several other surfactants chosen from amphoteric or nonionic surfactants.

11. Composition according to claim 10, **characterised in that** the surfactant(s) is/are chosen from alkylpolyglucosides, alkylpolypentosides and/or polyglycosides.

12. Use of a disinfectant and detergent composition according to any of claims 1 to 11 for the disinfection of equipment.

13. Utilisation according to claim 12, **characterised in that** the equipment is for medical, paramedical, veterinary, pharmaceutical or agro-foods use.

14. Method for disinfecting wherein at least one piece of equipment is dipped into an aqueous solution of a disinfectant and detergent composition according to any of claims 1 to 11, and then possibly rinsed with water.

15. Method according to claim 14, **characterised in that** the equipment is for medical use.
